# EUROPÄISCHE PATENTSCHRIFT

(11) **EP 0 815 367 B1**
(45) Veröffentlichungstag und Bekanntmachung des Hinweises auf die Patenterteilung: **16.06.1999**
(21) Anmeldenummer: 96907501.9
(22) Anmeldetag: 19.03.1996
(51) Int. Cl.: F16H 1/46

(54) **PLANETENGETRIEBE**
PLANETARY GEAR
ENGRENAGE PLANETAIRE

(30) Priorität: 23.03.1995 DE 19510499
(43) Veröffentlichungstag der Anmeldung: 07.01.1998
(73) Patentinhaber: ZF FRIEDRICHSHAFEN Aktiengesellschaft, 88038 Friedrichshafen (DE)
(72) Erfinder: SCHULZ, Horst, D-88045 Friedrichshafen (DE); SOMSCHOR, Bernd, D-88069 Tettnang (DE)
(74) Vertreter: Zietlow, Karl-Peter
(86) Internationale Anmeldenummer: EP9601170
(87) Internationale Veröffentlichungsnummer: WO9629526

(56) Entgegenhaltungen:
- EP-A- 0 627 575
- WO-A-95/04232
- CH-A- 257 825
- FR-A- 1 073 194
- US-A- 1 499 763
- US-A- 4 106 366
- US-A- 5 242 336

## Beschreibung

Die Erfindung bezieht sich auf ein Planetengetriebe mit einem angetriebenen Sonnenrad, zwei innenverzahnten Hohlrädern, von denen eines feststeht und das andere drehbar gelagert ist und den Abtrieb bildet. Es sind mehrere Planetenräder vorgesehen, die auf Planetenachsen in einem Planetenträger gelagert sind. Die Planetenräder stehen in ständigem Zahneingriff mit dem Sonnenrad und den Hohlrädern.

Viele Aufgabenstellungen in der Antriebstechnik verlangen die Realisierung extremer Übersetzungen. Planetengetriebe sind besonders gut geeignet, hohe Übersetzungen mit einer kompakten Bauweise zu vereinen. Ein derartiges Planetengetriebe stellt das Wolfrom-Koppelgetriebe dar, das bei einer hohen Übersetzung noch gute Wirkungsgrade aufweist. Als Wolfrom-Getriebe bezeichnet man ein besonderes, einfaches Koppelgetriebe. Der Antrieb ist mit einem Sonnenrad verbunden, das mit einem Planetenräderblock zusammenarbeitet. Das Planetenrad stützt sich an dem innenverzahnten Hohlrad ab, das gehäusefest ist. Der Steg als Planetenträger läuft leer mit. Die Bewegung wird über den Planetenträger und das/die Planetenrad/-räder (Stufenplanet) weitergeleitet. Das Planetenrad kämmt seinerseits wieder mit einem innenverzahnten Hohlrad, das den Abtrieb bildet. Die beschriebene Anordnung eignet sich für eine kompakte Bauweise, die auf engem Raum hohe Übertragungsdichten ermöglicht (vergleiche Klein: Theoretische Grundlagen zum Auslegen von Wolfrom-Koppelgetrieben, in Maschinenmarkt 1982, Seiten 341 bis 344).

Insbesondere in der Handhabungstechnik werden zur Leistungsübertragung von hochtourigen Antriebsmotoren hoch untersetzende Getriebe benötigt. Diese Getriebe sollen bei einem Lastrichtungswechsel ein kleines Verdrehspiel aufweisen. Ferner sollen sie sich durch eine drehstarre, leichte und kompakte Bauweise auszeichnen.

Bei Planetengetrieben der angesprochenen Gattung ist der Gesamtwirkungsgrad ein mitentscheidendes Kriterium für deren Brauchbarkeit. Innere Verspannungen haben beispielsweise durch die resultierende, erhöhte innere Wälzleistung einen gravierenden Einfluß auf den Gesamtwirkungsgrad.

Aus der US-PS 4 106 366 ist ein Planetengetriebe bekanntgeworden, bei dem ein innenverzahntes Hohlrad durch Schraubendruckfedern auf die konisch gefertigten Planetenräder gedrückt wird. Wegen der erhöhten Zahnwälzleistung durch innere Verspannungen wird hierbei der Gesamtwirkungsgrad unzulässig abgesenkt.

Ein Planetengetriebe mit Planetenrädern, die eine durchgehende Geradverzahnung aufweisen, ist ferner aus der US-PS 5 242 336 bekannt. Dieses Getriebe hat den Nachteil, daß ein relativ großer, eingriffsfreier axialer Zwischenraum zwischen den beiden Hohlrädern erforderlich ist, um den relativ großen Unterschied der Zähnezahlen beider Hohlräder ohne extreme Verzerrungen der Eingriffsverhältnisse auszugleichen. Dieser axiale Zwischenraum erhöht natürlich die axiale Baulänge des Getriebes und mindert dessen Steifigkeit. Von erheblichem Nachteil ist ferner die Zunahme an Massenträgheitsmoment, da die Planeten und der Planetenträger durch diesen Zwischenraum deutlich schwerer werden. Die dynamischen Eigenschaften dieses Antriebes werden durch diese Gestaltung verschlechtert, insbesondere, wenn die Planetenräder und der Planetenträger mit hohen Drehzahlen rotieren. Wollte man den erwähnten axialen Zwischenraum vermeiden, so wären erhebliche Verzerrungen der Eingriffsverhältnisse unvermeidbar. Extreme Werte im Profilverschiebungs-Faktor der Hohlräder führen zu spitzen Zahnlücken in den Hohlrädern, was sich auch ungünstig auf die Verzahnungswerkzeuge auswirkt. Weiterhin würden extreme Werte beim Betriebs-Eingriffswinkel zu Geräusch-, Reibmoment- und Verschleiß-Problemen führen.

Aus der europäischen Patentanmeldung 0 627 575 ist ein Wolfrom-Planetengetriebe bekanntgeworden, bei dem die Planetenräder axial in zwei unterschiedlich verzahnte Bereiche aufgeteilt sind. Die Teilkreisdurchmesser der beiden Verzahnungsbereiche können gleich oder ungleich sein. Die in den beiden Bereichen auftretenden Axialkräfte sollen durch gegensinnige Schrägverzahnungen etwa gegeneinander aufgehoben werden. Betrachtet man die auftretenden Zahnkräfte, so stellt man fest, daß sich die auftretenden Axialkräfte nicht gegenseitig aufheben, sondern sich zu einer Resultierenden addieren.

Bei dem Planetengetriebe nach der internationalen Patentanmeldung WO 95/04232 weisen die Planetenräder ebenfalls eine durchgehende Verzahnung auf. Der Vorteil dieser Anordnung besteht insbesondere darin, daß die Hohlräder in Axialrichtung unmittelbar aufeinanderfolgend angeordnet werden können. Dies gewährleistet eine hohe Steifigkeit des Getriebes, wenngleich der Unterschied in den Zähnezahlen der beiden Hohlräder klein sein sollte. Durch die Verzahnung mit durchgehend konstantem Profil der Zahnflanken an den Planeten müssen bei der gegenseitigen Abstimmung mit den Verzahnungen der beiden Hohlräder Kompromisse geschlossen werden.

Schließlich ist aus der US-A 1 499 763 entsprechend den Merkmalen im Oberbegriff der Ansprüche 1, 8 sowie 9 ein Getriebe bekanntgeworden, bei dem die erreichbare Untersetzung außerordentlich groß sein soll. Hierzu wird vorgeschlagen, die Planeten mit zwei Ritzeln mit gleichen Teilkreisdurchmessern, unterschiedlichen Zähnezahlen und verschiedenen Modulen zu bestücken. Die vorgeschlagene Auslegung der Planeten führt zu verzerrten Eingriffsverhältnissen, so daß dieses Getriebe einen sehr geringen Wirkungsgrad aufweist. Demzufolge ist der Verwendungszweck stark eingeschränkt.

Vom vorstehend erläuterten Stand der Technik ausgehend liegt der Erfindung die Aufgabe zugrunde, ein Planetengetriebe so auszugestalten, daß die Planeten voneinander getrennt zu optimierende Verzahnungsbereiche aufweisen, die so gestaltet sind, daß Verzerrungen in der Verzahnungsgeometrie vermieden werden.

Die der Erfindung zugrunde liegende Aufgabe wird durch ein Planetengetriebe gelöst, das die Merkmale der unabhängigen Ansprüche 1, 8 bzw. 9 aufweist.

Weitere vorteilhafte Merkmale und bauliche Ausgestaltungen sind den Unteransprüchen 2 bis 7 zu entnehmen.

Die mit der Erfindung erzielbaren Vorteile bestehen zusammenfassend inbesondere darin, daß die beiden Hohlräder in Axialrichtung unmittelbar aufeinanderfolgend angeordnet sein können. Da die Teilverzahnungen nicht identisch sind, können die jeweiligen Zahneingriffe getrennt optimiert werden. Dies bedeutet, daß die Betriebs-Eingriffswinkel normale Werte haben. Die Gestaltung der Verzahnungsbereiche der Planeten mit unterschiedlichen Modulen und damit unterschiedlichen Grundkreisen in beiden Verzahnungsbereichen macht eine weitgehende Kompensation des Einflusses der unterschiedlichen Zähnezahlen beider Hohlräder möglich. Einerseits ist es zwar möglich, die Hohlräder axial eng zusammengerückt anzuordnen, andererseits ergeben sich aber nur relativ geringe Verzerrungen in der Verzahnungsgeometrie. Somit sind die Voraussetzungen geschaffen, um gleichermaßen das Reibmoment, die Vibrationen und die Geräuschentwicklung gering zu halten und ein Maximum an Tragfähigkeit zu erzielen. Trotz in den Evolventen-Grundkreisen unterschiedlichen Verzahnungsbereichen bleiben die Montagebedingungen einfach. Die Module sind abgestuft so gewählt, daß sich in den jeweiligen Mitten beider Hohlräder - gesehen in Axialrichtung - jeweils annähernd gleiche Betriebs-Eingriffswinkel einstellen. Vorteilhaft ist es, wenn die Stufenplaneten schrägverzahnt sind. Die Schrägverzahnungen sollten vorzugsweise einen gleichen Richtungssinn und etwa gleiche Steigungsmaße aufweisen.

Weitere, für die Erfindung wesentliche Merkmale sowie die daraus resultierenden Vorteile sind der nachfolgenden Beschreibung zweier Ausführungsbeispiele eines spielfreien Planetengetriebes zu entnehmen.
Es zeigen:
- Fig. 1: eine erste Ausführungsform eines Planetengetriebes im Längsschnitt mit Stufenplaneten und konisch verzahnten Hohlrädern;
- Fig. 2: eine abgewandelte Ausführungsform eines Planetengetriebes mit modifizierten Stufenplaneten;
- Fig. 3: einen Stufenplaneten, wie er bei dem Planetengetriebe nach Fig. 1 eingesetzt wird, gesehen in teilweise geschnittener Seitenansicht;
- Fig. 4: eine Darstellung der Zahnformen des Stufenplaneten nach Fig. 3;
- Fig. 5: einen Stufenplaneten, wie er bei dem Planetengetriebe nach Fig. 2 eingesetzt wird, gesehen in teilweise geschnittener Seitenansicht;
- Fig. 6: eine Darstellung der Zahnformen des Stufenplaneten nach Fig. 5 und
- Fig. 7: eine Teilansicht des Planetengetriebes nach Fig. 1, die die räumliche Lage der Stufenplaneten wiedergibt.

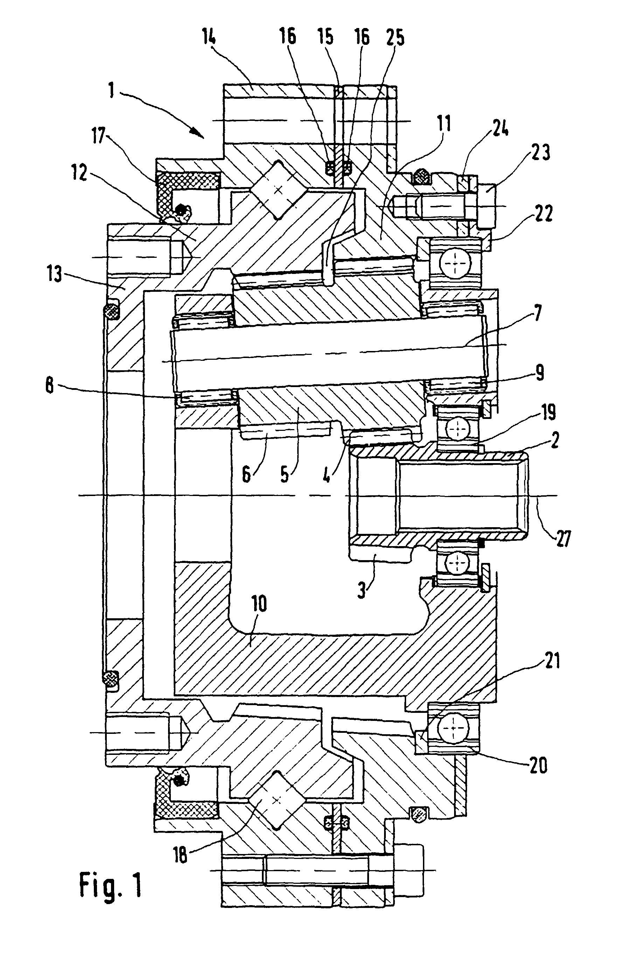

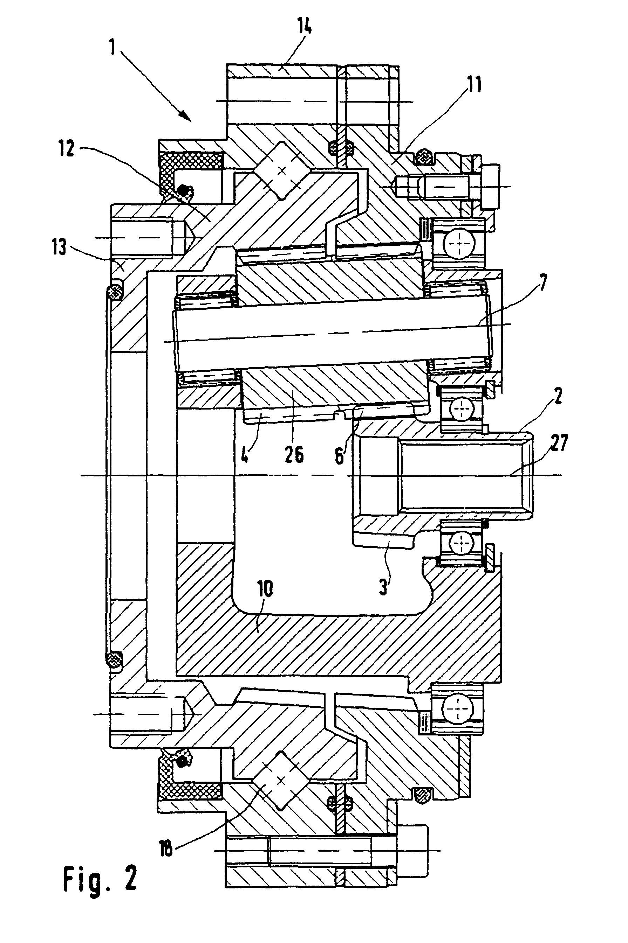

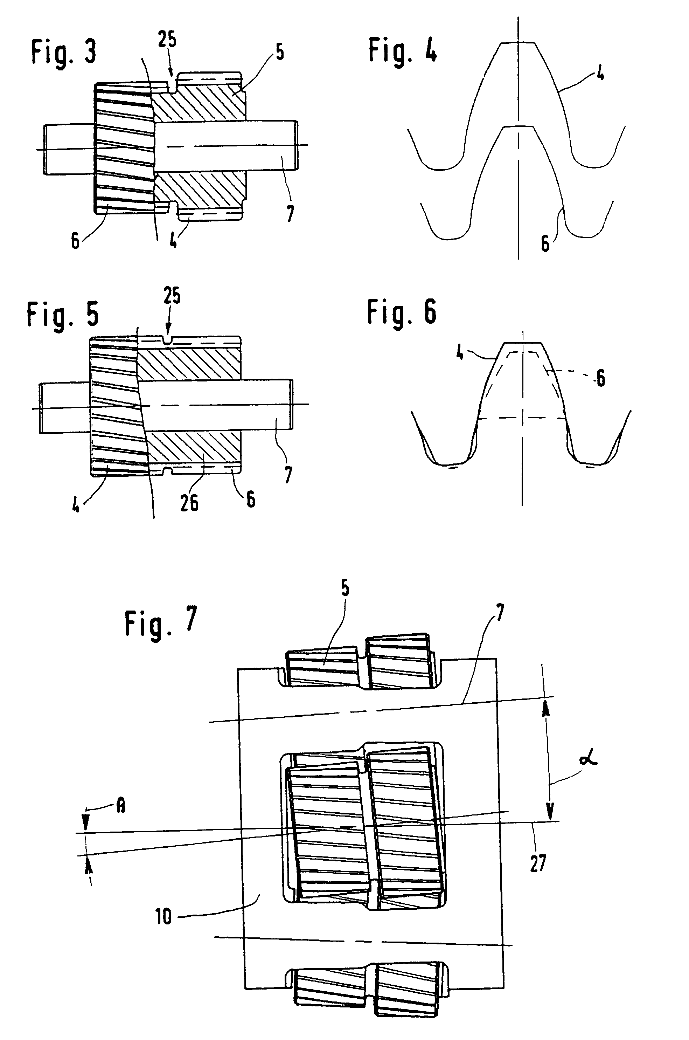

Bei dem in Fig. 1 im Längsschnitt dargestellten Planetengetriebe 1 treibt eine hochtourig umlaufende Eingangswelle 2 ein Sonnenrad 3 (kleines Zentralrad) an. Im vorliegenden Fall sind das Sonnenrad 3 und die Eingangswelle 2 einstückig hergestellt.

Das Sonnenrad 3 steht in ständig kämmender Verbindung mit mehreren großen Stufenrädern 4 je eines Stufenplaneten 5. Jeder Stufenplanet 5 wird durch ein kleines Stufenrad 6 vervollständigt. Einer der Stufenplaneten 5 ist in der Zeichnung abgebildet. Insgesamt sind vier Stufenplaneten 5 vorgesehen.

Eine Achse 7 ist über Lager 8 und 9, vorzugsweise Nadellager, in einem Planetenträger 10 drehbar gelagert. Jeder Stufenplanet 5 ist mit seiner Achse 7 drehfest und in Axialrichtung unverschiebbar, zum Beispiel über eine geeignete Paßverbindung, verbunden. Die großen Stufenräder 4 der Stufenplaneten 5 stehen in ständig kämmender Verbindung mit einem ersten Hohlrad 11. Gleichzeitig stehen sie über die kleinen Stufenräder 6 ständig mit einem zweiten Hohlrad 13 im Eingriff.

Der Planetenträger 10 weist keine direkten Anschlußwellen auf, so daß kein Drehmoment zu- oder abgeführt wird. Er läuft demzufolge leer mit.

Das erste Hohlrad 11 ist feststehend angeordnet, während das zweite Hohlrad 12 mit einem Abtriebsflansch 13 fest verbunden ist. Aus der Zeichnung ist ersichtlich, daß das zweite Hohlrad und der Abtriebsflansch 13 einstückig gefertigt sind.

Ein ringförmiges Gehäuse 14 ist mit dem ersten Hohlrad 11 über Befestigungselemente fest verbunden. Beispielsweise eignet sich hierzu eine Schraubverbindung. Zwischen den Anschlußflächen des ersten Hohlrades 11 und des ringförmigen Gehäuses 14 ist eine Distanzscheibe 15 eingelegt. Ferner ist über geeignete Dichtungen, beispielsweise 0-Ringe 16, für eine dichte Verbindung zwischen dem ersten Hohlrad 11 sowie dem ringförmigen Gehäuse 14 und der Distanzscheibe 15 gesorgt.

Um das Planetengetriebe 1 vor äußeren Einflüssen zu schützen, ist zwischen dem Gehäuse 14 und dem Abtriebsflansch 13 eine Dichtung, vorzugsweise ein Radialwellendichtring 17, eingeschaltet.

Das zweite Hohlrad 12 und damit auch der Abtriebsflansch 13 sind über ein einziges Wälzlager, das vorzugsweise als Kreuzrollenlager 18 ausgebildet ist, im ringförmigen Gehäuse 14 drehbar und in Axialrichtung feststehend gelagert. Anstelle des Kreuzrollenlagers bieten sich für den Fachmann andere Bauformen an. Beispielsweise könnten das zweite Hohlrad 12 und der Abtriebsflansch 13 über je ein Rillenkugellager im ringförmigen Gehäuse 14 abgestützt sein.

Eingangs wurde bereits erwähnt, daß der Planetenträger 10 keine direkten Anschlußwellen aufweist und demzufolge leer mitläuft. Der Planetenträger 10 ist hierzu ergänzend über ein Kugellager 19 auf der Eingangswelle 2 abgestützt. In etwa der gleichen Vertikalebene liegt ein weiteres Kugellager 20, über das der Planetenträger 10 im ersten Hohlrad 11 abgestützt ist. In axialer Richtung gesehen ist zwischen dem Kugellager 20 und dem ersten Hohlrad 11 eine Distanzscheibe 21 eingelegt. Im übrigen wird das Kugellager 20 über einen Haltering 22 mit Hilfe von Befestigungsschrauben, von denen eine Befestigungsschraube 23 dargestellt ist, am ersten Hohlrad 11 gesichert. Zwischen der in der Zeichnung rechts liegenden, ringförmigen Strinfläche 23 des ersten Hohlrades 11 und dem Haltering 22 ist eine weitere Distanzscheibe 24 eingeschaltet.

Die Eingangswelle 2 bzw. das Sonnenrad 3 wird mit einer hohen Drehzahl bei einem relativ niedrigen Moment angetrieben. Der Abtriebsflansch 13 (er kann mit einer selbst nicht dargestellten Abtriebswelle verbunden sein) läuft mit einer niedrigen Drehzahl bei einem hohen Moment um. Das Getriebe ist überall dort einsetzbar, wo eine drehstarre, leichte und kompakte Bauweise bei einer hohen Untersetzung benötigt wird. Ein mögliches Anwendungsgebiet ist beispielsweise der Einsatz in der Handhabungstechnik.

Die erwähnten Zahnräder können folgende Zähnezahlen aufweisen:
Sonnenrad 3: 18 Zähne,
großes Stufenrad 4 und kleines Stufenrad 6: jeweils 26 Zähne,
erstes Hohlrad 11 (Stator): 74 Zähne und
zweites Hohlrad 12 (Abtrieb): 70 Zähne.

Das große Stufenrad 4 und das kleine Stufenrad 6 haben gleiche Zähnezahlen. Die Module sind jedoch unterschiedlich. Beispielsweise kann der Modul des großen Stufenrades m = 1,09 und der des kleinen Stufenrades m = 1,225 betragen. Aus den unterschiedlichen Modulen ergeben sich unterschiedliche Grundkreise zur Erzeugung der Evolventen. Die Teil- und Grundkreise der Verzahnungen des großen und kleinen Stufenrades sind dadurch abgestuft.

Wie bereits erwähnt, greifen die Verzahnungen des großen Stufenrades 4 und des ersten Hohlrades 11 und die des kleinen Stufenrades 6 und des zweiten Hohlrades 12 ineinander. Um die hohe Untersetzung zu erzielen, weisen die Hohlräder 11, 12 unterschiedliche Zähnezahlen auf. Der Unterschied macht im vorliegenden Fall vier Zähne aus. Mit den unterschiedlich groß gewählten Modulen und damit voneinander abweichenden Grundkreisen des großen und kleinen Stufenrades 4, 6 ist eine weitgehende Kompensation des Unterschiedes der Zähnezahlen beider Hohlräder möglich. Es treten nur sehr geringe Verzerrungen in der Verzahnungsgeometrie auf, obwohl das erste Hohlrad 11 vom zweiten Hohlrad 25 lediglich durch einen geringen axialen Spalt 25 voneinander getrennt sind.

Da der Stufenplanet praktisch über seine gesamte axiale Länge mit den Hohlrädern im Zahneingriff steht, ergibt sich eine torsionssteife Bauweise.

Durch die in Axialrichtung unmittelbar aufeinanderfolgende Anordnung der Hohlräder und die weitgehend eintretende Kompensation des Zähnezahl-Unterschiedes beider Hohlräder und die Verwendung unterschiedlicher Module ergeben sich äußerst günstige Belastungsverhältnisse bei sehr geringen Verzerrungen in der Verzahnungsgeometrie. Somit sind optimale Voraussetzungen dafür gegeben, daß mehrere Ziele gleichermaßen erreicht werden:
die Tragfähigkeit wird gesteigert,
die Reibmomente werden minimiert,
Geräusche und Vibrationen werden abgesenkt und
die Montage wird vereinfacht.

Die abgestuften Module wurden so gewählt, daß sich in den jeweiligen Mitten beider Hohlräder 11, 12 - bezogen auf deren Verzahnungsbreite - jeweils annähernd gleiche Betriebs-Einstellwinkel einstellen. Um Schwankungen im Wirkungsgrad zu vermeiden und das Vibrations- und Geräuschverhalten zu verbessern, hat es sich als sehr vorteilhaft herausgestellt, die Verzahnungen des großen und kleinen Stufenrades als Schrägverzahnungen auszubilden. Hierbei wird das Getriebe unempfindlich gegenüber axialem Spiel der Stufenplaneten 5, wenn die Schrägverzahnungen gleichen Richtungssinn und etwa gleiche Steigungsmaße aufweisen.

In Fig. 3 ist ein Stufenplanet 5 in teilweise geschnittener Seitenansicht abgebildet. Die Schrägverzahnungen des kleinen und großen Stufenrades 6, 4 sind durch eine Lücke, die etwa dem axialen Spalt 25 entspricht, voneinander abgesetzt.

In Fig. 4 ist - unten - die Zahnform der Schrägverzahnung des kleinen Stufenrades 6 angedeutet, während - oben - die Zahnform der Schrägverzahnung des großen Stufenrades 4 eingezeichnet ist. Die Zähnezahl ist für beide Zahnräder gleich. Mit gleichen Zähnezahlen ergeben sich erheblich einfachere Montageabläufe, da es nicht erforderlich ist, daß ein bestimmter Zahn am Stufenplaneten in eine bestimmte Zahnlücke eines Hohlrades montiert werden muß.

Auch bei der Herstellung der Verzahnung der Stufenräder muß keine bestimmte Stellungszuordnung beachtet werden, sofern die bei der Einstellung der Werkzeugmaschine zufällig erzeugte Stellungszuordnung für alle Stufenplaneten eines Getriebes gleich bleibt. Im Ergebnis werden die Herstell- und Montagekosten gesenkt.

Besondere Vorteile für die Steifigkeit des Getriebes ergeben sich, wenn die Stellungen der Zähne der Verzahnung des kleinen und großen Stufenrades 6, 4 der Stufenplaneten 5 übereinstimmend gewählt sind. Der axiale Spalt 25 zwischen dem Verzahnungsbereich des kleinen und großen Stufenrades ist wegen des geringen Unterschiedes der Teilkreisdurchmesser mit keinen Nachteilen für die Steifigkeit des Antriebes verbunden. Dieser axiale Spalt 25 dient lediglich dazu, die beiden Verzahnungsbereiche voneinander abzusetzen. In diesem Sinne hat dieser axiale Spalt nicht etwa die Wirkung eines tiefen, steifigkeitsmindernden Freistichs zwischen den Verzahnungsbereichen des Stufenplaneten.

Das vorstehend gesagte wird noch deutlicher, wenn man das Ausführungsbeispiel eines Planetengetriebes nach Fig. 2 betrachtet. Dieses Planetengetriebe stimmt grundsätzlich mit der Bauform desjenigen nach Fig. 1 überein. Abweichungen betreffen die Gestaltung des Stufenplaneten 26, insbesondere hinsichtlich der Gestaltung der Verzahnungsbereiche. Das Sonnenrad hat eine Zähnezahl von z = 22. Die Anzahl der Zähne der Hohlräder und der Stufenräder 6 und 4 stimmen mit derjenigen des Planetengetriebes nach Fig. 1 überein.

Bei dem Stufenplaneten 26, der in Fig. 5 in teilweise geschnittener Seitenansicht abgebildet ist, haben sich die Verhältnisse insoweit umgekehrt, als das große Stufenrad 4 nunmehr links liegt, bezogen auf die Zeichnung, und mit dem zweiten Hohlrad 12 im Zahneingriff steht. Das kleine Stufenrad 6 liegt in der Zeichnung rechts und steht im Eingriff mit dem ersten (feststehenden) Hohlrad 11. Der Modul des kleinen Stufenrades 6 beträgt hier m = 1,185 und der Modul des großen Stufenrades 4 wurde mit m = 1,125 gewählt. Die Zahnformen sind der Abbildung entsprechend Fig. 6 zu entnehmen. Die Zahnflanken der Verzahnung des kleinen Stufenrades 6 weichen oberhalb des Teilkreisdurchmessers gegenüber den Zahnflanken der Verzahnung des großen Stufenrades 4 zurück, was durch die gestrichelt eingezeichnete Zahnform hervorgehoben ist. Der Kopfkreisdurchmesser des kleinen Stufenrades 6 ist kleiner. Im Bereich des Zahnfußes bzw. des Grundkreises ist die Zahnbreite der Verzahnung des kleinen Stufenrades 6 gegenüber derjenigen des großen Stufenrades 4 breiter. Demzufolge sind die Zahnflanken hier sichtbar und als durchgezogene Linien gezeichnet.

Auch hier ergeben sich besondere Vorteile für die Steifigkeit des Antriebes. Die Stellungen der Zähne beider Verzahnungsbereiche des großen und kleinen Stufenrades 4, 6 zueinander sind übereinstimmend gewählt. Im Bereich des axialen Spaltes 25 entsteht eine Übergangszone, in der beide Verzahnungsbereiche gemeinsame Verbindungsquerschnitte aufweisen können.

Für sämtliche Zahnformen ist zutreffend, daß die Herstellung keine Schwierigkeiten bereitet. Das Vorverzahnen erfolgt im ungehärteten Zustand für beide Verzahnungsbereiche durchgehend gleich. Dies setzt eine entsprechend großzügig bemessene Zugabe bei der Zahndicke für die Fertigbearbeitung voraus. Die unterschiedlich abgestufte Flankenform beider Zahnbereiche wird anschließend bei der Feinbearbeitung im harten Zustand erzeugt. Für die Feinbearbeitung eignet sich insbesondere ein Honverfahren.

Nahezu gleich günstige Wirkungsgrade in beiden Drehrichtungen - trotz des Einflusses, der aus dem Richtungssinn der Schrägverzahnung resultiert - lassen sich erreichen, wenn die Stufenplaneten 5 räumlich unparallel in zwei Richtungen geneigt angeordnet sind. Die Stufenplaneten 5 (vergleiche Fig. 7) sind einmal gegenüber einer Getriebe-Hauptachse 27 unter einem spitzen Winkel α radial geneigt und zum anderen zusätzlich unter einem Achskreuzungswinkel β in Umfangsrichtung schräg angestellt.

Durch die voneinander getrennten Verzahnungsbereiche der Stufenräder können die Verzahnungen getrennt voneinander optimiert werden.

Die vorstehend beschriebenen Ausführungsbeispiele eines erfindungsgemäßen, nahezu spielfreien Planetengetriebes erlauben die Darstellung großer Übersetzungen. Gesetzt den Fall, daß der Antriebsmotor versetzt zur Getriebe-Hauptachse angeordnet werden soll, kann das Sonnenrad 3 entfallen. Der Antrieb des Planetenträgers 10 erfolgt dann vorzugsweise über eine Stirnradstufe, die aus einer Verzahnung am Planetenträger 10 und einem Antriebsritzel gebildet ist. Dieses Antriebsritzel ist dann in bezug auf die Achse 27 des Planetengetriebes exzentrisch liegend angeordnet.

Die außermittige Anordnung ermöglicht die Unterbringung des Antriebsmotors seitlich der Getriebe-Hauptachse und ist, je nach den vorliegenden Raumverhältnissen, sinnvoll, um axiale Baulänge zu sparen. Andere Raumverhältnisse lassen es vorteilhaft erscheinen, den Planetenträger über eine Kegelradstufe anzutreiben, so daß der Antriebsmotor radial zum Planetengetriebe plaziert werden kann. Wesentlich bei diesen genannten Antriebsmöglichkeiten ist, daß der Planetenträger mittelbar vom Antriebsmotor über eine Vorübersetzung angetrieben wird.

### Bezugszeichen

- 1: Planetengetriebe
- 2: Eingangswelle
- 3: Sonnenrad
- 4: großes Stufenrad
- 5: Stufenplanet
- 6: kleines Stufenrad
- 7: Achse
- 8: Lager
- 9: Lager
- 10: Planetenträger
- 11: erstes Hohlrad
- 12: zweites Hohlrad
- 13: Abtriebsflansch
- 14: ringförmiges Gehäuse
- 15: Distanzscheibe
- 16: O-Ringe
- 17: Radialwellendichtring
- 18: Kreuzrollenlager
- 19: Kugellager
- 20: Kugellager
- 21: Distanzscheibe
- 22: Haltering
- 23: Befestigungsschraube
- 24: Distanzscheibe
- 25: axialer Spalt
- 26: Stufenplanet
- 27: Getriebehauptachse

## Patentansprüche

1. Planetengetriebe (1) mit einem angetriebenen Sonnenrad (3), einem ersten und einem zweiten, jeweils innenverzahnten Hohlrad (11, 12), von denen das erste feststeht und das zweite drehantreibbar gelagert ist und den Abtrieb bildet, und Planetenrädern, die auf geneigt verlaufenden Achsen (7) in einem Planetenträger (10) in der Weise gelagert sind, daß sie in ständigem Zahreingriff mit dem Sonnenrad (3) und den Hohlrädern (11, 12) stehen, wobei die Planetenräder als Stufenplaneten (5, 25) mit Stufenrädern (6, 4) ausgebildet sind und die Verzahnungen der Stufenräder verschiedene Moduln aufweisen, dadurch **gekennzeichnet,** daß die Stufenplaneten kleine und große Stufenräder aufweisen und die Zähnezahlen der Stufenräder und die relativen Stellungen der Zähne der kleinen und großen Stufenräder zueinander für alle Planeten eines Getriebes gleich sind.

2. Planetengetriebe nach Anspruch 1, dadurch **gekennzeichnet**, daß das kleine und große Stufenrad (6, 4) des Stufenplaneten (5, 26) schrägverzahnt sind, wobei die Schrägverzahnungen gleichen Richtungsinn und etwa gleiche Steigungsmaße aufweisen.

3. Planetengetriebe nach den Ansprüchen 1 und 2, dadurch **gekennzeichnet**, daß die Moduln der Verzahnungen des kleinen und großen Stufenrades so gewählt sind, daß sich, gesehen in Axialrichtung, in den jeweiligen Mitten beider Hohlräder (11, 12) jeweils annähernd gleiche Betriebs-Eingriffswinkel einstellen.

4. Planetengetriebe nach den Ansprüchen 1 bis 3, dadurch **gekennzeichnet**, daß die Stellungen der Zähne des kleinen und großen Stufenrades zueinander übereinstimmend gewählt sind.

5. Planetengetriebe nach Anspruch 1, dadurch **gekennzeichnet,** daß die Achsen (7) der Stufenplaneten (5) räumlich unparallel in zwei Richtungen geneigt angeordnet sind.

6. Planetengetriebe nach Anspruch 5, dadurch **gekennzeichnet**, daß die Achsen (7) unter einem Achskreuzungswinkel β in Umfangsrichtung schräg angestellt sind.

7. Planetengetriebe nach Anspruch 1, dadurch **gekennzeichnet,** daß die Verzahnungen des Stufenplaneten (5, 26) gehont sind.

8. Planetengetriebe (1) mit einem ersten und einem zweiten, jeweils innenverzahnten Hohlrad (11, 12), von denen das erste feststeht und das zweite drehantreibbar gelagert ist und den Abtrieb bildet, und Planetenrädern, die auf geneigt verlaufenden Achsen (7) in einem Planetenträger (10) in der Weise gelagert sind, daß sie in ständigem Zahneingriff mit den Hohlrädern (11, 12) stehen, wobei die Planetenräder als Stufenplaneten (5, 26) mit Stufenrädern (6, 4) ausgebildet sind und die Verzahnungen der Stufenräder verschiedene Moduln aufweisen, dadurch **gekennzeichnet**, daß die Stufenplaneten kleine und große Stufenräder aufweisen, daß die Zähnezahlen der Stufenräder und die relativen Stellungen der Zähne der kleinen und großen Stufenräder zueinander für alle Planeten eines Getriebes gleich sind, und daß der Planetenträger (10) über eine Stirnradstufe mit zur Getriebe-Hauptachse parallel versetzter Antriebswelle angetrieben ist.

9. Planetengetriebe (1) mit einem ersten und einem zweiten, jeweils innenverzahnten Hohlrad (11, 12), von denen das erste feststeht und das zweite drehantriebbar gelagert ist und den Abtrieb bildet, und Planetenrädern, die auf geneigt verlaufenden Achsen (7) in einem Planetenträger (10) in der Weise gelagert sind, daß sie in ständigem Zahneingriff mit dem Hohlrädern (11, 12) stehen, wobei die Planetenräder als Stufenplaneten (5, 26) mit Stufenrädern (6, 4) ausgebildet sind und die Verzahnungen der Stufenräder verschiedene Moduln aufweisen, dadurch **gekennzeichnet**, daß die Stufenplaneten kleine und große Stufenräder aufweisen, daß die Zähnezahlen der Stufenräder und die relativen Stellungen der Zähne der kleinen und großen Stufenräder zueinander für alle Planeten eines Getriebes gleich sind, und daß der Planetenträger (10) über eine Kegelradstufe angetrieben ist,
die von einem radial zum Planetengetriebe plazierten Antriebsmotor antreibbar ist.

## Claims

1. Planetary gearing (1) having a driven sun wheel (3), a first and a second ring gear (11, 12) each with internal teeth, of which the first is fixed and the second is supported so as to be rotatable and forms the output, and having planet wheels which are supported along inclined axes (7) in a pinion cage (10) in such a way that they are in constant mesh with the sun wheel (3) and with the ring gears (11, 12), the planet wheels taking the form of stepped planets (5, 26) with stepped wheels (6, 4) and the gear teeth of the stepped wheels having different modules,
characterized in that the stepped planets comprise small and large stepped wheels and the numbers of teeth of the stepped wheels and the relative positions of the teeth of the small and large stepped wheels to one another are identical for all planets of a gearing.

2. Planetary gearing according to claim 1, characterized in that the small and the large stepped wheel (6, 4) of the stepped planet (5, 26) have helical teeth, the helical teeth extending in an identical direction and having substantially identical pitch dimensions.

3. Planetary gearing according to claims 1 and 2, characterized in that the modules of the teeth of the small and the large stepped wheel are so selected that, viewed in axial direction, in each case approximately identical operational engagement angles arise in the respective centres of both ring gears (11, 12).

4. Planetary gearing according to claims 1 to 3, characterized in that the positions of the teeth of the small and the large stepped wheel relative to one another are selected so as to match.

5. Planetary gearing according to claim 1, characterized in that the axes (7) of the stepped planets (5) are arranged inclined in two directions in a spatially non-parallel manner.

6. Planetary gearing according to claim 5, characterized in that the axes (7) are adjusted obliquely in peripheral direction at an axis-crossing angle β.

7. Planetary gearing according to claim 1, characterized in that the gear teeth of the stepped planets (5, 26) are honed.

8. Planetary gearing (1) having a first and a second ring gear (11, 12) each with internal teeth, of which the first is fixed and the second is supported so as to be rotatable and forms the output, and having planet wheels which are supported along inclined axes (7) in a pinion cage (10) in such a way that they are in constant mesh with the ring gears (11, 12), the planet wheels taking the form of stepped planets (5, 26) with stepped wheels (6, 4) and the gear teeth of the stepped wheels having different modules, characterized in that the stepped planets comprise small and large stepped wheels, that the numbers of teeth of the stepped wheels and the relative positions of the teeth of the small and large stepped wheels to one another are identical for all planets of a gearing, and that the pinion cage (10) is driven via a spur wheel step by a drive shaft offset parallel to the main axis of the gearing.

9. Planetary gearing (1) having a first and a second ring gear (11, 12) each with internal teeth, of which the first is fixed and the second is supported so as to be rotatable and forms the output, and having planet wheels which are supported along inclined axes (7) in a pinion cage (10) in such a way that they are in constant mesh with the ring gears (11, 12), the planet wheels taking the form of stepped planets (5, 26) with stepped wheels (6, 4) and the gear teeth of the stepped wheels having different modules, characterized in that the stepped planets comprise small and large stepped wheels, that the numbers of teeth of the stepped wheels and the relative positions of the teeth of the small and large stepped wheels to one another are identical for all planets of a gearing, and that the pinion cage (10) is driven via a bevel wheel step, which is drivable by a drive motor positioned radially relative to the planetary gearing.

## Revendications

1. Engrenage planétaire (1) comportant une roue solaire (3) entraînée, une première et une deuxième roue à denture intérieure (11, 12), dont la première est fixe et la deuxième est montée de façon à pouvoir être entraînée par rotation et qu'elle forme la sortie, et des roues planétaires qui sont montées sur des arbres à fonctionnement incliné (7) dans une cage de transmission planétaire (10) de telle façon qu'elles s'engrènent en permanence avec la roue solaire (3) et les roues à denture intérieure (11, 12), les roues planétaires étant conçues comme planètes à gradins (5, 26) avec des roues à gradins (6, 4) et les dentures des rouées à gradins présentant différents modules, caractérisé en ce que les planètes à gradins comportent des petites et des grandes roues à gradins et en ce que le nombre de dents des roues à gradins et les positions relatives des roues à gradins l'une par rapport à l'autre sont identiques pour toutes les planètes d'un engrenage.

2. Engrenage planétaire selon la revendication 1, caractérisé en ce que la petite et la grande roue à gradins (6, 4) de la planète à gradins (5, 26) sont à denture hélicoïdale, les dentures hélicoïdales présentant le même sens directionnel et approximativement les mêmes dimensions de pas.

3. Engrenage planétaire selon les revendications 1 et 2, caractérisé en ce que les modules des dentures de la petite et de la grande roue à gradins sont choisis de telle façon que, vu dans le sens axial, dans le centre des deux roues à denture intérieure (11, 12) se règlent approximativement les mêmes angles de pression pendant le fonctionnement.

4. Engrenage planétaire selon les revendications 1 à 3, caractérisé en ce que les positions des dents de la petite et de la grande roue à gradins sont choisies de façon à concorder entre elles.

5. Engrenage planétaire selon la revendication 1, caractérisé en ce que les arbres (7) des planètes à gradins (5) sont disposés de façon non parallèle dans l'espace, inclinés dans deux directions.

6. Engrenage planétaire selon la revendication 5, caractérisé en ce que les arbres (7) sont positionnés de façon oblique dans le sens circonférentiel sous un angle de deux droites croisées β.

7. Engrenage planétaire selon la revendication 1, caractérisé en ce que les dentures de la planète à gradins (5, 26) sont obtenues par honage.

8. Engrenage planétaire (1) comportant une première et une deuxième roue à denture intérieure (11, 12), dont la première est fixe et la deuxième est montée de façon à pouvoir être entraînée par rotation et forme la sortie, et des roues planétaires qui sont montées sur des arbres à fonctionnement incliné (7) dans une cage de transmission planétaire (10) de telle façon qu'elles s'engrènent en permanence avec les roues à denture intérieure (11, 12), les roues planétaires étant conçues comme planètes à gradins (5, 26) avec des roues à gradins (6, 4) et les dentures des roues gradins présentant différents modules, caractérisé en ce que les planètes à gradins comportent des petites et des grandes roues à gradins, en ce que le nombre de dents des roues à gradins et les positions relatives des dents des petites et des grandes roues à gradins l'une par rapport à l'autre sont identiques pour toutes les planètes d'un engrenage, et en ce que la cage de transmission planétaire (10) est entraînée par l'intermédiaire d'un gradin de roue droite avec l'arbre menant décalé parallèlement par rapport à l'arbre principal de l'engrenage.

9. Engrenage planétaire (1) comportant une première et une deuxième roue à denture intérieure (11, 12), dont la première est fixe et la deuxième est montée de façon à pouvoir être entraînée par rotation et qu'elle forme la sortie, et des roues planétaires qui sont montées sur des arbres à fonctionnement incliné (7) dans une cage de transmission planétaire (10) de telle façon qu'elles s'engrènent en permanence avec les roues à denture intérieure (11, 12), les roues planétaires étant conçues comme planètes à gradins (5, 26) avec des roues à gradins (6, 4) et les dentures des roues à gradins présentant différents modules, caractérisé en ce que les planètes à gradins comportent des petites et des grandes roues à gradins, en ce que le nombre de dents des roues à gradins et les positions relatives des dents des petites et grandes roues à gradins l'une par rapport à l'autre sont identiques pour toutes les planètes d'un engrenage et en ce que la cage de transmission planétaire (10) est entraînée par l'intermédiaire d'un gradin de roue conique qui peut être entraîné par un moteur d'entraînement placé dans le sens radial par rapport à l'engrenage planétaire.
